Europäisches Patentamt

European Patent Office

Office européen des brevets

(19)

(11) Veröffentlichungsnummer: **0 440 867 A1**

## (12) EUROPÄISCHE PATENTANMELDUNG

(21) Anmeldenummer: 90102591.6

(22) Anmeldetag: 09.02.90

(51) Int. Cl.⁵: **G01F 1/66**

(43) Veröffentlichungstag der Anmeldung:
**14.08.91 Patentblatt 91/33**

(84) Benannte Vertragsstaaten:
**AT BE CH DE DK ES FR GB GR IT LI NL SE**

(71) Anmelder: **Siemens Aktiengesellschaft**
**Wittelsbacherplatz 2**
**W-8000 München 2(DE)**

(72) Erfinder: **Baumgärtner, Manfred, Dr.-Ing**
**Jakob-Henle-Strasse 26**
**W-8510 Fürth(DE)**

(54) **Ultraschall-Durchflussmessrohr.**

(57) Ein Ultraschall-Durchflußmeßrohr (1) zur Messung der Geschwindigkeit einer das Meßrohr durchstömenden Flüssigkeit ist im Querschnitt rechteckig ausgebildet. Die die Meßwandler (7, 8) tragende untere Meßrohrwand (4) ist im Längsschnitt U-förmig gestaltet und deren Schenkel sind von zwei im Abstand voneinander angeordnete und einander zugewandte Schrägen (5, 6) gebildet. Die Meßwandler (7, 8) sind derart in diese Schrägen (5 6) eingefügt, daß deren Innenseiten eine ebene Fläche bilden. Die Winkelstellung der Schrägen (5, 6) ist derart gewählt, daß das Ultraschallstrahlenbündel (9, 10) des jeweils sendenden Ultraschallwandlers nach einfacher Reflexion an der Innenseite der gegenüberliegenden oberen Meßrohrwand (11) oder nach mehrfachen Reflexionen an den Innenseiten der oberen und unteren Meßrohrwände (4, 11) senkrecht auf die Membran des jeweils empfangenden Ultraschallwandlers trifft.

FIG 1

EP 0 440 867 A1

# ULTRASCHALL-DURCHFLUSSMESSROHR

Die Erfindung betrifft ein Ultraschall-Durchflußmeßrohr zur Messung der Geschwindigkeit einer das Meßrohr durchströmenden Flüssigkeit nach dem Oberbegriff des Patentanspruches 1.

Ein Ultraschall-Durchflußmeßrohr dieser Art ist aus der EP-A-0 303 255 bekannt. Bei dieser Einrichtung sind zwei Ultraschallwandler mit senkrecht zur Wandlermembran orientierter Sende-Empfangsrichtung des Ultraschallstrahlenbündels verwendet und an einer in Strömungsrichtung geraden Meßrohrwand angeordnet. Um bei dieser Anordnung das Ultraschallstrahlenbündel vom jeweils sendenden zum empfangenden Wandler mit einer Rich-tungskomponente in Strömungsrichtung des flie-ßenden Mediums bzw. in entgegengesetzter Richtung zu führen, ist die den Ultraschallwandlern gegenüberliegende Meßrohrwand im Längsschnitt U-förmig derart ausgebildet, daß diese Wand an den den Wandlern gegenüberliegenden Bereichen einander zugewandte Schrägen aufweist, die das ge-sendete Ultraschallstrahlenbündel unter einem sol-chen Winkel auf die gegenüberliegende Wand und von dieser auf die zweite Schräge reflektieren, daß es senkrecht auf die Membran des empfangenden Wandlers trifft. Ein derart ausgebildetes Meßrohr hat vor allem zwei Vorteile. Es erlaubt zum einen die Verwendung von Wandlern mit senkrecht zur Membranfläche aus- und eintretendem Ultraschallstrahl, die gegenüber den sog. Interdigitalwandlern mit zur Membranfläche schräg orientierter Ultraschallführung weniger aufwendig sind. Darüber hinaus können diese Wandler mit ihrer Membranfläche parallel zur Strömungsrichtung angeordnet werden, so daß keine toten Räume entstehen, in denen sich durch Wirbelbildung Ablagerungen festsetzen, die eine Anwendung des Meßrohres im Lebensmittelbereich aus Hygienegründen fraglich erscheinen lassen. Nachteilig bei dieser Anordnung ist allerdings einmal der Umstand, daß das Ultraschallstrahlenbündel erst nach einer dreifachen Reflexion an den Innenwänden des Meßrohres vom jeweils sendenden zum empfangenden Wandler gelangt, denn jede Reflexion erzeugt einerseits Streustrahlen, die den Meßwert verfälschen und bewirkt andererseits eine Schwächung des Ultraschallstrahlenbündels durch Eindringen eines Teile der Strahlungsenergie in die Rohrwand aufgrund von dem Brechungsgesetz unterliegenden Vorgängen. Zum anderen liefert der zweimalige Durchtritt des Strahlenbündels in Querrichtung durch die Flüssigkeit keinen Beitrag zum Meßergebnis und ist demzufolge uneffizient. Meßfehler entstehen ferner auch dann, wenn sich innerhalb des Meßrohres Strömungsturbulenzen bilden, die sich innerhalb des Strömungsquerschnittes zeitabhängig räumlich verlagern, so daß diese nicht kontinuierlich vom Strahlenbündel erfaßt werden und daher den Meßwert zeitabhängig verfälschen.

Der Erfindung liegt die Aufgabe zugrunde, ein Meßrohr mit Ultraschallwandlern mit senkrecht zur Membranfläche orientierter Sende-Empfangsrichtung des Ultraschallstrahlenbündels aus zustatten und so zu gestalten, daß sich ein möglichst wirbelbildungsfreier Durchfluß des Mediums ohne Schmutzeckenbildung einstellt und daß die Art der Strahlführung eine hohe Effizienz und Fehlerfreiheit gewährleistet.

Diese Aufgabe wird durch die im Patentanspruch 1 angegebene Erfindung gelöst. Damit ist erreicht, daß auch bei Verwendung von Ultraschallwandlern mit senkrecht zu deren Membranfläche orientierter Sende-Empfangsrichtung des Ultraschallstrahlenbündels eine Einfachreflexion möglich ist, ohne dazu auf den nachteiligen Schrägeinbau der Wandler mit den dabei entstehenden Nischen, die zu Schmutzecken führen, zurückgreifen zu müssen. Diese Art der Unterbringung der Ultraschallwandler bewirkt außerdem eine wesentliche kompaktere, zu einer Minimierung des Einbauraumes führende Außengestaltung des Meßrohres.

Durch die Wahl des minimalen Innenabstandes zwischen den Längswänden gemäß Patentanspruch 2 ist erreicht, daß das Ultraschallstrahlen-bündel praktisch den gesamten Durchflußquer-schnitt der Flüssigkeit durchsetzt und damit das meßwertverfälschende Durchqueren von Turbulen-zen durch das Ultraschallstrahlenbündel weitge-hend vermieden ist.

Anhand von Ausführungsbeispielen wird die Erfindung im folgenden näher erläutert. Darin zeigen

Fig. 1     einen Längsschnitt durch ein erfindungsgemäß gestaltetes Meßrohr mit Einfachreflexion,

Fig. 2     einen Querschnitt durch das Meßrohr nach Fig. 1, und

Fig. 3     eine Variante des Meßrohres nach Fig. 1 mit Mehrfachreflexion des Ultraschallstrahlenbündels.

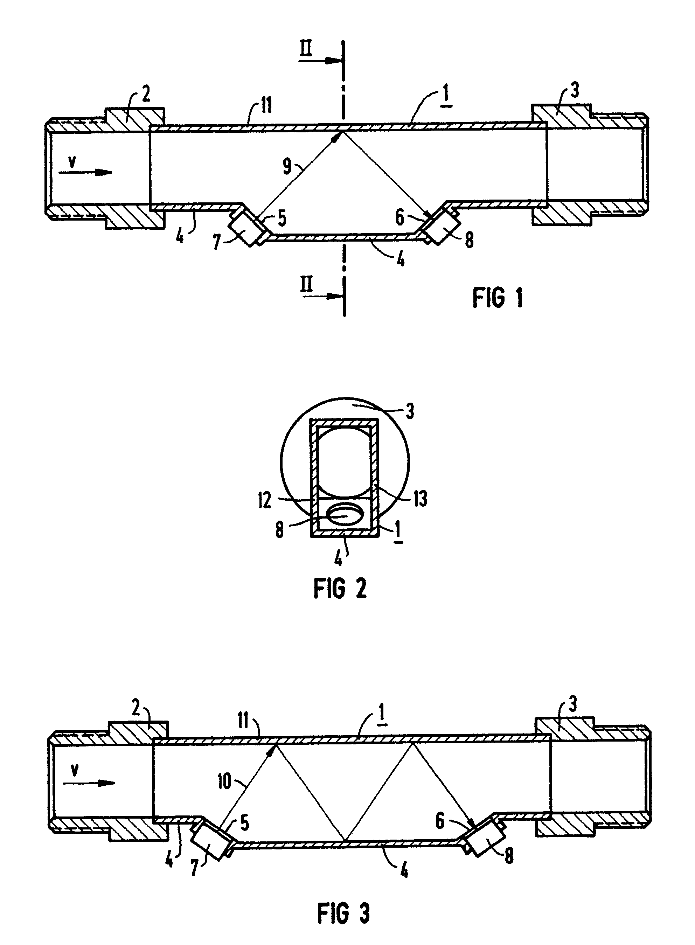

Das in den Fig. 1 und 3 im Längsschnitt dargestellte Meßrohr 1 besitzt gemäß Fig. 2 einen rechteckigen Innenquerschnitt. Dieser geht an den Enden des Meßrohres in einen runden Querschnitt über, so daß an beiden Enden Anschlußflansche 2, 3 aufgesetzt werden können, die mit einem Außengewinde zum Einfügen in ein Rohrnetz versehen sind. Die untere Meßrohrwand 4 ist U-förmig ausgebildet und besitzt zwei in einem Winkel gegeneinander gerichtete Schrägen 5, 6. In diesen Schrägen sind Ultraschall-Meßwandler 7, 8 als kombinierte Sende- und Empfangswandler mit einer senkrecht zu deren Membranflächen und den dazu parallelliegenden Innenflächen der Schrägen orientierten Sende-Empfangsrichtung des Ultraschallstrahlenbündels, das vom jeweils sendenden Meßwandler in das Innere des Meßrohres eingestrahlt und vom jeweils empfangenden Ultraschallwandler aufgenommen wird. Die obere Meßrohrwand 11 dient als Ultraschall-Reflektor.

In der Ausführungsform nach Fig. 1 sind die Winkelverhältnisse so gewählt, daß das beispielsweise vom Meßwandler 7 ausgesendete Ultraschallstrahlenbündel 9 nach dessen Reflexion an der Innenfläche der oberen Meßrohrwand 11 senkrecht auf die Membran des empfangenden Ultraschallwandlers 8 trifft. In der Ausführungsform nach Fig. 3 sind die Winkelverhältnisse so gewählt, daß das vom Meßwandler 7 ausgesendete Ultraschallstrahlenbündel 10 nach einer ersten Reflexion an der oberen Meßrohrwand 11, einer zweiten Reflexion an der unteren Meßrohrwand 4 zwischen den Meßwandlern 7 und 8 und einer dritten Reflexion an der oberen Meßrohrwand 11 senkrecht auf die Membran des empfangenden Meßwandlers 8 trifft.

Zur Ermittlung der Geschwindigkeit v der das Meßrohr 1 in Pfeilrichtung durchströmenden Flüssigkeit wird im alternierenden Sende- und Empfangsbetrieb hin- und hergeschaltet, so daß das Ultraschallstrahlenbündel 9, 10 einmal eine resultierende Richtungskomponente in Fließrichtung und das andere Mal gegen die Fließrichtung besitzt. Daraus resultieren Laufzeitunterschiede zwischen der einen und der anderen Ultraschallstrahlenrichtung, die nach der Laufzeitdifferenzmessung, der Phasendifferenzmessung oder als direkte Laufzeitmessung nach dem sog. Sing-Around-Verfahren ausgewertet werden können. Diese Verfahren sind ausführlich in der DE-A-28 28 937 beschrieben. Die Beziehungen zwischen Schallwellenlänge und Meßrohrwand sind in der vorgenannten EP-A-0 303 255 im einzelnen dargelegt.

Die lichte Weite der Meßkammer 1 zwischen den beiden seitlichen Meßrohrwänden 12, 13 ist gleich oder wenig größer als der Durchmesser des Ultraschallstrahlenbündels 9, 12. Dadurch ist erreicht, daß etwa durch Wirbelbildung der Flüssigkeit verursachte Dichteschwankungen vollständig vom Ultraschallstrahl erfaßt werden, was zu einer Stabilisierung des Meßwertes beiträgt.

**Patentansprüche**

1.    Ultraschall-Durchflußmeßrohr zur Messung der Geschwindigkeit einer das Meßrohr durchströmenden Flüssigkeit mit zwei in Strömungsrichtung des Mediums versetzt angeordneten, als kombinierte Sende- und Empfangswandler ausgebildeten Ultraschallwandlern mit senkrecht zu deren Membranflächen orientierter Sende-Empfangsrichtung des Ultraschallstrahlenbündels, das durch synchrones Umschalten der Wandler von Senden auf Empfangen und umgekehrt nach einfacher oder mehrfacher Reflexion an gegenüberliegen den Innenwandflächen des Meßrohres die Flüssigkeit in Fließrichtung und entgegengesetzt dazu mehrfach kreuzt, und das jeweils gesendete Ultraschallstrahlenbündel im Meßrohr derart geführt ist, daß es den jeweils empfangenen Meßwandler in dessen Empfangsrichtung erreicht, und das Meßrohr im Meßbereich einen rechteckigen Innenquerschnitt besitzt, **dadurch gekennzeichnet**, daß die die Meßwandler (7, 8) tragende untere Meßrohrwand (4) im Längsschnitt U-förmig gestaltet ist, deren Schenkel durch zwei im Abstand zueinander angeordnete und einander zugewandte Schrägen (5, 6) gebildet und die Meßwandler (7, 8) derart in diese Schrägen (5, 6) eingefügt sind, daß deren Innenseiten eine ebene Oberfläche bilden und die Winkelstellung der Schrägen (5, 6) derart gewählt ist, daß das Ultraschallstrahlenbündel (9, 10) des jeweils sendenden Ultraschallwandlers nach einfacher Reflexion an der Innenseite der gegenüberliegenden oberen Meßrohrwand (11) oder nach mehrfachen Reflexionen an den Innenseiten der oberen und unteren Meßrohrwände (4, 11) senkrecht auf die Membran des jeweils empfangenden Ultraschallwandlers trifft.

2.    Ultraschall-Durchflußmeßrohr nach Anspruch 1, **dadurch gekennzeichnet**, daß der Innenabstand zwischen den seitlichen Meßrohrwänden (12, 13) im Meßbereich gleich oder geringfügig größer ist als der Durchmesser des Ultraschallstrahlenbündels (9, 10).

3.    Ultraschall-Durchflußmeßrohr nach Anspruch 1 oder 2, **dadurch gekennzeichnet**, daß das Meßrohr (1) an seinen Enden in einen runden Querschnitt übergeht und mit Anschlußflanschen (2, 3) zum Einfügen des Meßrohres (1) in eine Rohrleitung versehen ist.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0303255 (SIEMENS) <br> * Spalte 4, Zeilen 4 - 46 * <br> * Spalte 5, Zeilen 1 - 9; Figur 1 * <br> --- | 1, 3 | G01F1/66 |
| Y | US-A-4103551 (PANAMETRICS) <br> * Spalte 10, Zeilen 2 - 4 * <br> * Spalte 10, Zeilen 42 - 53 * <br> * Spalte 12, Zeilen 27 - 35; Figuren 5, 7 * <br> --- | 1, 3 | |
| A | DE-U-8900110 (ISKRA-SOZD) <br> * Seite 3, Absatz 1; Figur 4 * <br> --- | 1 | |
| A | PATENT ABSTRACTS OF JAPAN <br> vol. 7, no. 290 (P-245)(1435) 24 Dezember 1983, <br> & JP-A-58 162815 (HONDA GIKEN KOGYO K.K.) 27 September 1983, <br> * das ganze Dokument * <br> --- | 1 | |
| A | FR-A-2385084 (SOCIETE ANONYME CROUZET) <br> * Seite 2, Zeilen 12 - 25; Figur FIG. * <br> --- | 1 | RECHERCHIERTE SACHGEBIETE (Int. Cl.5) |
| A | US-A-4555951 (J.S. GUTTERMAN) <br> * Spalte 2, Zeilen 25 - 35; Figur 2 * <br> ----- | 1 | G01F |

**Der vorliegende Recherchenbericht wurde für alle Patentansprüche erstellt**

| Recherchenort | Abschlußdatum der Recherche | Prüfer |
|---|---|---|
| DEN HAAG | 03 OKTOBER 1990 | HEINSIUS R. |

EPO FORM 1503 03.82 (P0403)